# EUROPEAN PATENT APPLICATION

(11) **EP 4 586 381 A1**
(43) Date of publication of application: **16.07.2025**
(21) Application number: 22958447.9
(22) Date of filing: 15.09.2022
(51) Int. Cl.: H01M 50/244, H01M 50/242, H01M 50/503

(54) **BATTERY AND ELECTRIC DEVICE**

(71) Applicant: CONTEMPORARY AMPEREX TECHNOLOGY (HONG KONG) LIMITED, Central (HK)
(72) Inventor: SUI, Zhenjie, Ningde, Fujian 352100 (CN); LIU, Xiaolong, Ningde, Fujian 352100 (CN); WANG, Yanhui, Ningde, Fujian 352100 (CN)
(74) Representative: Laufhütte, Dieter
(86) International application number: PCT/CN2022/119133
(87) International publication number: WO 2024/055255

(57) **Abstract**

This application discloses a battery and an electric device. The battery includes a housing, a battery module, and a positioning member. A structural beam is arranged inside the housing. The battery module is arranged in the housing. The positioning member is connected to the structural beam for positioning the battery module. The technical solution provided in this application can reduce the manufacturing cost of the battery.

## Description

### TECHNICAL FIELD

This application relates to the field of battery technologies, and specifically, to a battery and an electric device.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

In the development of battery technology, how to reduce the manufacturing cost of batteries is a technical problem to be solved urgently.

### SUMMARY

This application provides a battery and an electric device, which can reduce the manufacturing cost of the battery.

This application is implemented using the following technical solutions.

According to a first aspect, this application provides a battery including a housing, where a structural beam is arranged inside the housing; a battery module, arranged in the housing; and a positioning member, connected to the structural beam and configured for positioning the battery module.

According to the battery of the embodiment of this application, when the specifications of the battery module change, this application can use a replacement of the positioning member (redesigning the positioning member based on the changed specifications of the battery module), so that the battery module with the changed specification can be effectively positioned at an appropriate position of the housing. Compared to the solution of redesigning the housing size to avoid the battery module from being unable to be positioned in the housing, this can effectively save the housing cost, thereby reducing the manufacturing cost of the battery.

According to some embodiments of this application, the positioning member is provided with a first positioning part, and the battery module is provided with a first positioning mating part, where the first positioning part cooperates with the first positioning mating part.

In the foregoing solution, the first positioning part of the positioning member and the first positioning mating part of the battery module cooperate with each other, making the positioning member effectively position the battery module in the housing.

According to some embodiments of this application, the first positioning part is a first positioning pin, and the first positioning mating part is a first positioning hole; or the first positioning part is a first positioning hole, and the first positioning mating part is a first positioning pin.

In the foregoing solution, the first positioning pin and the first positioning hole cooperate with each other, allowing for convenient and quick positioning of the battery module, thereby improving the assembly efficiency of the battery.

According to some embodiments of this application, the battery module includes a pair of end plates and a plurality of battery cells, where the plurality of battery cells are stacked between the pair of end plates, and the first positioning mating part is arranged on the end plate.

In the foregoing solution, the first positioning mating part is arranged on the end plate, thereby eliminating the need to modify battery cells in the battery module, reducing the manufacturing cost of the battery module, and ensuring the cooperation between the battery module and the positioning member under low-cost conditions.

According to some embodiments of this application, the housing includes a bottom wall and side walls, the side walls are arranged around the bottom wall, the structural beam is arranged on the bottom wall, and two ends of the structural beam are connected to the side walls.

In the foregoing solution, the structural beam is arranged on the bottom wall, and two ends of the structural beam are connected to the side walls, which can effectively improve the structural strength of the housing, making the battery structure stable.

According to some embodiments of this application, the structural beam divides the internal space of the housing into two chambers, and at least one of the chambers is provided with at least one battery module.

In the foregoing solution, on the one hand, the structural beam plays a role in improving the structural strength of the housing, and on the other hand, the structural beam reasonably divides the internal space of the housing into two chambers, separating the battery modules, or separating the battery modules from other components of the battery (such as a battery management system that detects the operating state of the battery).

According to some embodiments of this application, the structural beam divides the internal space of the housing into a first chamber and a second chamber, and each of the first chamber and the second chamber is provided with at least one of the battery modules.

In the foregoing solution, the structural beam divides the internal space of the housing into the first chamber and the second chamber, allowing a plurality of battery modules to be separately arranged, thereby reducing the risk of thermal propagation (thermal propagation refers to the situation where one battery module undergoes thermal runaway and affects adjacent battery modules), and improving the safety of the battery.

According to some embodiments of this application, the positioning member bypasses the structural beam to position the battery module arranged in the first chamber and the battery module arranged in the second chamber.

In the foregoing solution, the positioning member bypasses the structural beam, enabling the positioning of the battery module in the first chamber and the battery module in the second chamber, ensuring that each battery module is positioned at an appropriate location within the housing.

According to some embodiments of this application, the positioning member includes a first sub-positioning member and a second sub-positioning member separately arranged and connected with each other, where the first sub-positioning member is configured for positioning the battery module arranged in the first chamber, the second sub-positioning member is configured for positioning the battery module arranged in the second chamber, and both the first sub-positioning member and the second sub-positioning member are connected to the structural beam.

In the foregoing solution, the first sub-positioning member and the second sub-positioning member are separately arranged and configured for positioning the battery module arranged in the first chamber and the battery module arranged in the second chamber respectively. This allows for separate design and replacement when the specifications of the battery modules change, thereby reducing the cost of the positioning members.

According to some embodiments of this application, the first sub-positioning member and the second sub-positioning member have a same structure.

In the foregoing solution, the first sub-positioning member and the second sub-positioning member have the same structure, so that the first positioning mating parts on the battery modules in the first chamber and the second chamber have the same structure, reducing the manufacturing cost associated with different designs. Additionally, due to the same structure, the assembly actions are consistent, improving assembly efficiency.

According to some embodiments of this application, the structural beam has a top surface facing away from the bottom wall and a first side surface facing the first chamber; and the first sub-positioning member includes a first wall, a second wall, and a third wall, where the first wall is connected to the top surface, the second wall extends from the first wall towards the bottom wall and covers at least a part of the first side surface, and the third wall is connected to the second wall, where the third wall is provided with the first positioning part.

In the foregoing solution, the first wall is connected to the top surface, and the second wall covers at least a part of the first side surface, making the connection between the first sub-positioning member and the structural beam stable, ensuring that the first positioning part on the third wall can effectively position the battery module arranged in the first chamber.

According to some embodiments of this application, the structural beam has a second side surface facing the second chamber, and the second sub-positioning member includes a fourth wall, a fifth wall, and a sixth wall, where the fourth wall is connected to the top surface, the fifth wall extends from the fourth wall towards the bottom wall and covers at least a part of the second side surface, and the sixth wall is connected to the fifth wall, where the sixth wall is provided with the first positioning part.

In the foregoing solution, the fourth wall is connected to the top surface, and the fifth wall covers at least a part of the second side surface, making a connection between the second sub-positioning member and the structural beam stable, ensuring that the first positioning part on the sixth wall can effectively position the battery module arranged in the second chamber.

According to some embodiments of this application, the first wall and the third wall extend in opposite directions from two ends of the second wall, and the fourth wall and the sixth wall extend in opposite directions from two ends of the fifth wall.

In the foregoing solution, the first wall and the third wall extend in opposite directions, that is, the first wall can rest on the top surface of the structural beam, and the third wall can rest on the upper surface or the lower surface of the battery module (the upper surface of the battery module is the surface of the battery module facing away from the bottom wall, and the lower surface of the battery module is the surface of the battery module facing the bottom wall), to effectively position the battery module in the first chamber, similarly, the fourth wall and the sixth wall extend in opposite directions, that is, the fourth wall can rest on the top surface of the structural beam, and the sixth wall can rest on the top surface or the bottom surface of the battery module, to effectively position the battery module in the first chamber.

According to some embodiments of this application, the battery module has a first surface facing the bottom wall and a second surface facing away from the bottom wall, and the first positioning mating part is arranged on the first surface or the second surface.

In the foregoing solution, when the first positioning mating part is arranged on the first surface, the positioning member can be arranged on the structural beam first, so that the third wall and the sixth wall are arranged on the bottom wall, and then the battery module is placed in the housing based on the first positioning part until the first positioning mating part and the first positioning part are properly engaged, completing the positioning of the battery module. When the first positioning mating part is arranged on the second surface, the battery module can be placed in the housing first, and then the positioning member can be arranged on the structural beam. Because there is a gap between the battery module and the housing, the position of the battery module can be adjusted to make the first positioning part and the first positioning mating part cooperate with each other, completing the positioning.

According to some embodiments of this application, the first chamber and the second chamber are arranged along a first direction, and each battery module is provided with at least two first positioning mating parts spaced apart along a second direction, where the first direction, the second direction, and a thickness direction of the bottom wall are perpendicular to each other.

In the foregoing solution, arranging a plurality of first positioning mating parts along the second direction can improve the positioning accuracy of the positioning member and the battery module, ensuring that the battery module is in an appropriate position in the housing.

According to some embodiments of this application, the first chamber and the second chamber are arranged along a first direction, the battery module has two third surfaces opposite each other along a second direction, and the first positioning mating part is arranged on the third surface, where the first direction, the second direction, and a thickness direction of the bottom wall are perpendicular to each other.

In the foregoing solution, the third surface of the battery module may be an end surface of the battery module, that is, a surface of the end surface along a stacking direction of battery cells. A plane where the third wall and the sixth wall are located can be parallel to the third surface to cooperate with the first positioning mating part arranged on the third surface.

According to some embodiments of this application, the first sub-positioning member and the second sub-positioning member are detachably connected to the structural beam separately.

In the foregoing solution, since the first and second sub-positioning members are detachably connected to the structural beam, the first and second sub-positioning members can be conveniently replaced at any time, thereby saving the time for replacing the positioning members.

According to some embodiments of this application, the top surface is provided with a second positioning pin, the first wall and the fourth wall are stacked, the first wall is provided with a second positioning hole for inserting the second positioning pin, and the fourth wall is provided with a third positioning hole for inserting the second positioning pin.

In the foregoing solution, the second positioning pin on the top surface of the structural beam can cooperate with the second positioning hole on the first sub-positioning member and the third positioning hole on the second sub-positioning member, thereby facilitating the detachable assembly between the positioning member and the structural beam. In addition, in some embodiments, the structural beam itself has a positioning pin for positioning and assembling with the vehicle. Therefore, this positioning pin can be reasonably used as the second positioning pin to cooperate with the positioning member.

According to some embodiments of this application, the battery further includes a partition plate, where the partition plate is arranged on the bottom wall and perpendicular to the structural beam to divide the first chamber into two first sub-chambers and the second chamber into two second sub-chambers.

In the foregoing solution, the partition plate is arranged to separate the first chamber into two first sub-chambers, and the second chamber into two second sub-chambers, further dividing the interior of the housing into four sections. This arrangement can reasonably separate a plurality of battery modules, thereby ensuring the safety of each battery module.

According to some embodiments of this application, the positioning member is formed with an avoidance slot to avoid the partition plate.

In the foregoing solution, the positioning member is provided with an avoidance slot to avoid the partition plate, so that the positioning member can position each battery module arranged in the first sub-chamber and the second sub-chamber in the housing.

According to a second aspect, this application further provides an electric device, including the battery described in any one of the first aspect, where the battery is configured to supply electrical energy.

For additional aspects and advantages of this application, some will be given in the following description, and some will become apparent in the following description or will be understood in the practice of this application.

### BRIEF DESCRIPTION OF DRAWINGS

To describe the technical solutions in embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a perspective view of a battery according to some embodiments of this application;
FIG. 3 is a schematic diagram of a housing according to some embodiments of this application;
FIG. 4 is a schematic diagram of a battery module according to some embodiments of this application;
FIG. 5 is a schematic diagram of a positioning member according to some embodiments of this application;
FIG. 6 is a schematic diagram of end plates and battery cells according to some embodiments of this application;
FIG. 7 is a sectional view of a positioning member and a structural beam according to some embodiments of this application;
FIG. 8 is a schematic diagram of a first sub-positioning member according to some embodiments of this application;
FIG. 9 is a schematic diagram of a second sub-positioning member according to some embodiments of this application;
FIG. 10 is a schematic diagram of a battery module and a first sub-positioning member according to some embodiments of this application;
FIG. 11 is a schematic diagram of a battery module and a first sub-positioning member according to other embodiments of this application;
FIG. 12 is a schematic diagram of a battery module according to other embodiments of this application; and
FIG. 13 is a schematic diagram of a positioning member according to other embodiments of this application.

Signs: 100: battery; 10: housing; 11: bottom wall; 12: side wall; 13: first chamber, 130: first sub-chamber, 14: second chamber; 140: second sub-chamber, 20: battery module; 21: first positioning mating part; 22: end plate; 23: battery cell; 220: first surface; 221: second surface; 30: positioning member, 31: first positioning part; 32: first sub-positioning member; 320: first wall; 3200: second positioning hole; 321: second wall; 322: third wall; 33: second sub-positioning member; 330: fourth wall; 3300: third positioning hole; 331: fifth wall; 332: sixth wall; 34: avoidance slot; 40: structural beam; 41: top surface; 42: first side surface; 43: second side surface; 44: second positioning pin; 50: partition plate; 1000: vehicle; 200: controller; and 300: motor.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell can be cuboidal or in other shapes. The embodiment of this application describes the battery cells as cuboidal.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. A surface of the positive electrode current collector is coated with the positive electrode active substance layer. A positive electrode current collector uncoated with the positive electrode active substance layer protrudes out of a positive electrode current collector coated with the positive electrode active substance layer, and the positive electrode current collector uncoated with the positive electrode active substance layer serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. A surface of the negative electrode current collector is coated with the negative electrode active substance layer. A negative electrode current collector uncoated with the negative electrode active substance layer protrudes out of a negative electrode current collector coated with the negative electrode active substance layer, and the negative electrode current collector uncoated with the negative electrode active substance layer serves as a negative electrode tab. The negative electrode current collector may be made of copper, and the negative electrode active substance may be carbon, silicon, or the like. To allow a high current to pass through without any fusing, a plurality of positive tabs are provided and stacked together, and a plurality of negative tabs are provided and stacked together. The separator may be made of PP (polypropylene, polypropylene), PE (polyethylene, polyethylene), or the like.

The battery module mentioned in the embodiment of this application refers to a single physical module including one or more battery cells to provide higher voltage and capacity. The battery module further includes end plates, where the end plates are arranged in pairs, and a plurality of stacked battery cells are positioned between the two end plates to be fastened by the two end plates.

The battery mentioned in the embodiment of this application refers to a single physical module including one or more battery modules to provide higher voltage and capacity. In the prior art, the battery further includes a housing, where a structural beam is arranged inside the housing, and one or more battery modules are arranged inside the housing and fixed in the housing based on the structural beam. For example, the structural beam is provided with screw holes/bolts, and the battery modules are positioned and fixed to the structural beam through bolts/screw holes. The housing protects the battery modules, preventing the battery modules, that is, the battery cells, from being affected by external objects. Generally, in the assembly of batteries, there is a gap between the battery module and the housing, and the size range of the gap should meet the design requirements to ensure that the battery module is in an appropriate position in the housing to meet the heat dissipation of the battery module and the assembly of other structures of the battery (such as water cooling plates).

The development of battery technology needs to consider many design factors, such as energy density, cycle life, discharge capacity, charge-discharge rate, and other performance parameters. In addition, the manufacturing cost of the battery also needs to be considered. The inventors have found that the housing and battery module are separately sourced (for example, the housing is provided by one supplier, and the battery module by another supplier). However, as the demand for battery capacity changes, the specifications of the battery module correspondingly changes (for example, the number of battery cells in the battery module changes, or the size of the battery cells changes). However, the positions of the screw holes/bolts on the structural beam of the housing are fixed, leading to a situation where the battery module with changed specifications cannot cooperate with the structural beam, making it impossible to position the battery module. Therefore, to position the battery cells with changed specifications in an appropriate position, the housing is usually redesigned and remanufactured, extending the manufacturing cycle of the battery and increasing the manufacturing cost of the battery.

In view of this, considering the frequent changes in battery module specifications, to avoid redesigning and remanufacturing the housing, thereby reducing the manufacturing cost of the battery, the inventors have conducted in-depth research and provided a battery that includes a positioning member connected to the structural beam. The battery module is positioned inside the housing through the positioning member. The housing, positioning member, and battery module are separately sourced, and when the specifications of the battery module change, only the positioning member, which is relatively low-cost, need to be replaced to achieve the positioning of the battery module, without redesigning the entire housing, thereby effectively reducing the manufacturing cost of the battery.

The technical solution described in this embodiment of this application is applicable to batteries and electric devices using batteries.

The electric device may be a vehicle, a mobile phone, a portable device, a notebook computer, a ship, a spacecraft, an electric toy, an electric tool, or the like. The vehicle may be a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, an example in which the electric device is a vehicle 1000 is used for description in the following embodiments.

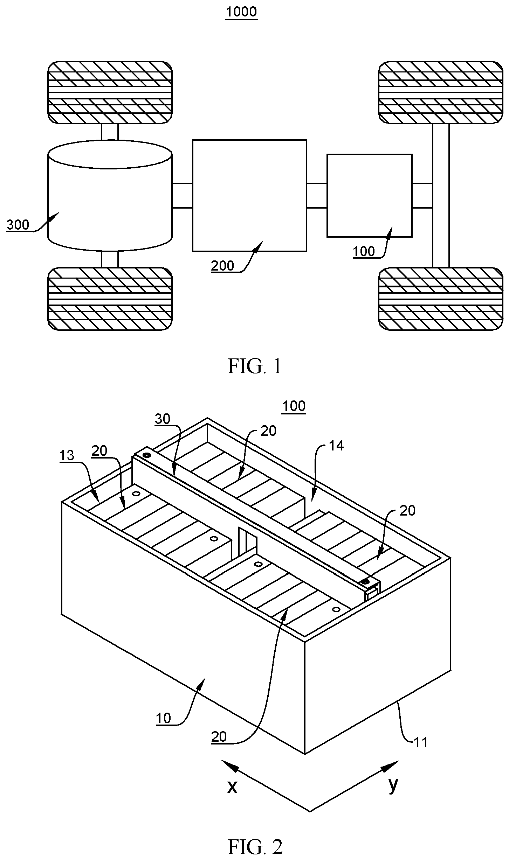

FIG. 1 is a schematic structural view of a vehicle 1000 according to some embodiments of this application.

A controller 200, a motor 300, and a battery 100 may be provided in the vehicle 1000, where the controller 200 is configured to control the battery 100 to supply power to the motor 300. For example, the battery 100 may be provided at the bottom, front, or rear of the vehicle 1000. The battery 100 may be configured to supply power to the vehicle 1000. For example, the battery 100 may be used as an operational power source for the vehicle 1000 that is configured for a circuit system of the vehicle 1000, for example, to satisfy power needs of start, navigation, and running of the vehicle 1000. In another embodiment of this application, the battery 100 can be used as not only the operational power source for the vehicle 1000, but also as a driving power source for the vehicle 1000, replacing or partially replacing fossil fuel or natural gas to provide driving traction for the vehicle 1000.

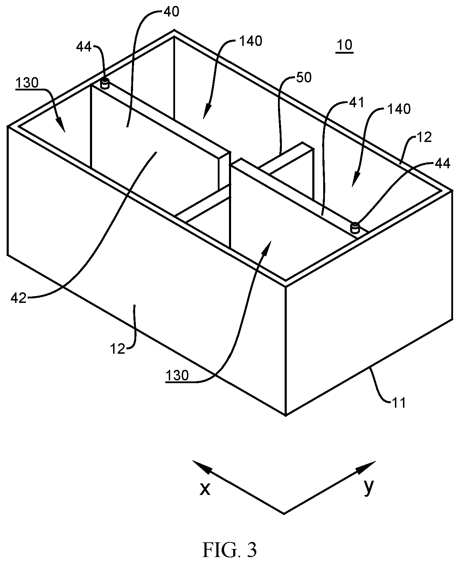

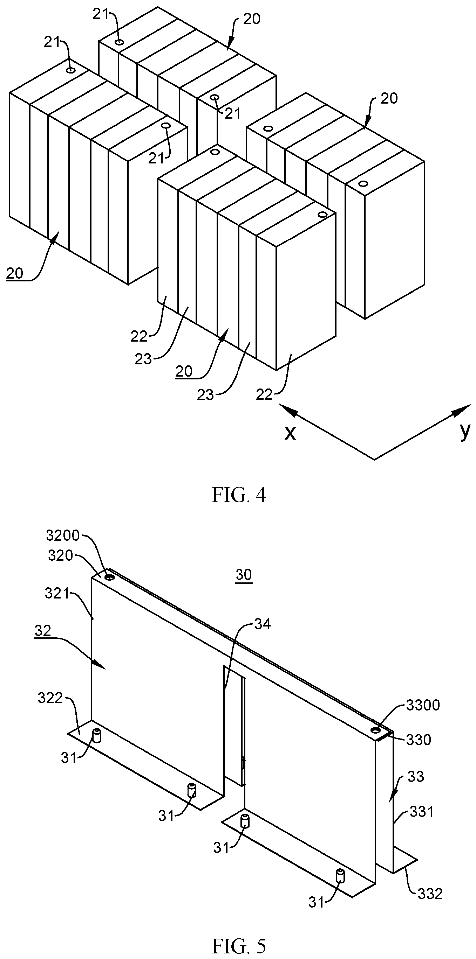

According to some embodiments of this application, refer to FIG. 2 to FIG. 5. FIG. 2 is a perspective view of a battery 100 according to some embodiments of this application; FIG. 3 is a schematic diagram of a housing 10 according to some embodiments of this application; FIG. 4 is a schematic diagram of a battery module 20 according to some embodiments of this application; and FIG. 5 is a schematic diagram of a positioning member 30 according to some embodiments of this application.

The battery 100 includes a housing 10, a battery module 20, and a positioning member 30. A structural beam 40 is arranged inside the housing 10. The battery module 20 is arranged in the housing 10. The positioning member 30 is connected to the structural beam 40 for positioning the battery module 20.

The housing 10 is a component for protecting the battery module 20 and preventing the battery cell 23 from being affected by external objects. In some embodiments, the housing 10 has an opening through which the battery module 20 can be placed in the housing 10, and then the opening is closed by a cover plate (not shown in the figure). In other embodiments, the housing 10 is not provided with a cover plate, and the housing is directly assembled to the chassis of the vehicle, with the opening of the housing 10 being closed by the chassis of the vehicle. The structural beam 40 is arranged inside the housing 10 to improve the structural strength of the housing 10 and serves as a positioning reference component between the housing 10 and the battery module 20.

The positioning member 30 is arranged on the structural beam 40 and is configured to cooperate with the battery module 20 for positioning, thereby positioning the battery module 20 in the housing 10 based on the structural beam 40, ensuring that the battery module 20 is in an appropriate position. The design cost, mold cost, and manufacturing cost of the positioning member 30 are all lower than those of the housing 10.

In actual production, the housing 10 and the positioning member 30 are separately sourced. Only during assembling of the battery 100, the positioning member 30 is connected to the structural beam 40, which can meet the conditions for redesigning the positioning member 30.

In the above solution, when the specifications of the battery module 20 change, the housing 10 does not need to be redesigned. Based on the specifications of the battery module 20 and the dimensions of the housing 10, and considering the appropriate position of the battery module 20 relative to the housing 10, only the positioning member 30 needs to be redesigned. The redesigned positioning member 30 can effectively position the battery module 20 inside the housing 10, meeting the dynamic assembly requirements under low-cost conditions due to changes in the specifications of the battery module 20.

According to some embodiments of this application, the positioning member 30 is provided with a first positioning part 31, the battery module 20 is provided with a first positioning mating part 21, and the first positioning part 31 cooperates with the first positioning mating part 21.

The first positioning part 31 is a component arranged on the positioning member 30 for cooperating with the first positioning mating part 21. The first positioning mating part 21 is a component arranged on the battery module 20 for cooperating with the first positioning part 31.

Positioning cooperation means that when the first positioning part 31 and the first positioning mating part 21 cooperate with each other, the battery module 20 can be positioned and fixed by the positioning member 30, remaining in a stable state inside the housing 10, and the position of the battery module 20 in the housing 10 is the designed appropriate position.

In some embodiments, when the specifications of the battery module 20 change, the redesign of the positioning member 30 can refer to redesigning the position of the first positioning part 31 on the positioning member 30.

In the foregoing solution, the first positioning part 31 of the positioning member 30 cooperates with the first positioning mating part 21 of the battery module 20, making the positioning member 30 effectively position the battery module 20 inside the housing 10.

According to some embodiments of this application, the first positioning part 31 is a first positioning pin, and the first positioning mating part 21 is a first positioning hole; or the first positioning part 31 is a first positioning hole, and the first positioning mating part 21 is a first positioning pin.

In some embodiments, referring to FIGs. 4 and 5, the first positioning mating part 21 is a first positioning hole, and the first positioning part 31 is a first positioning pin. Through the cooperation of the pin and the hole, the battery module 20 can be quickly positioned. In other embodiments, the first positioning mating part 21 can alternatively be a first positioning pin, and the first positioning part 31 can alternatively be a first positioning hole.

It should be noted that in some embodiments, the diameter of the first positioning hole can be larger than the diameter of the first positioning pin (for example, the diameter of the first positioning hole is 8 mm, and the diameter of the first positioning pin is 7.8 mm), so that the first positioning pin can be quickly inserted into the first positioning hole. This application does not limit the shape of the first positioning hole, which can be circular, elongated, square, or the like, as long as the first positioning pin can be inserted for positioning.

In the foregoing solution, through the cooperation of the first positioning pin and the first positioning hole, the battery module 20 can be conveniently and quickly positioned, improving the assembly efficiency of the battery 100.

In other embodiments, the first positioning mating part 21 and the first positioning part 31 may be in a bolt-nut structure or a bolt-screw hole structure.

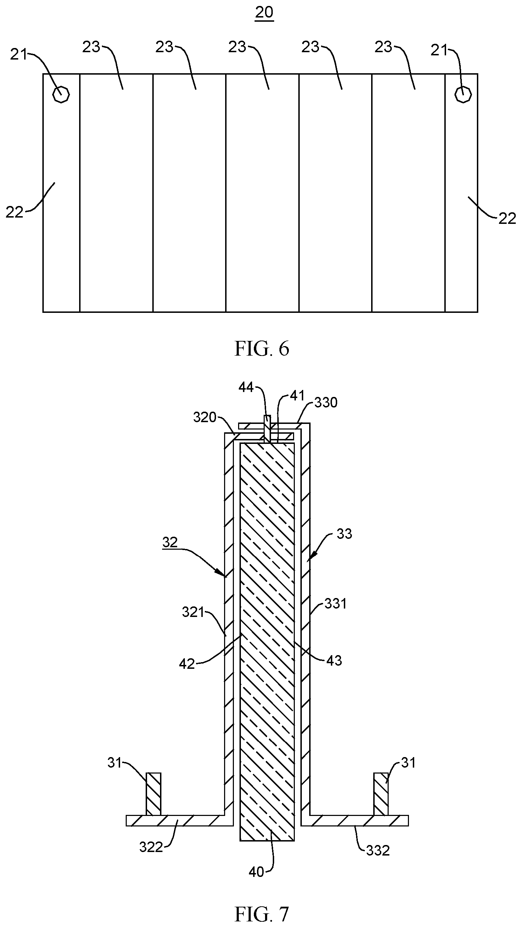

According to some embodiments of this application, refer to FIG. 6. FIG. 6 is a schematic diagram of end plates 22 and battery cells 23 according to some embodiments of this application. The battery module 20 includes a pair of end plates 22 and a plurality of battery cells 23, where the plurality of battery cells 23 are stacked between the pair of end plates 22, and the first positioning mating part 21 is arranged on the end plate 22.

As shown in FIG. 6, along the stacking direction of the plurality of battery cells 23, the two end plates 22 are respectively located at two ends of the plurality of battery cells 23.

In some embodiments, the end plates 22 can be made of aluminum or other metal materials or plastic materials, serving as structural components for fastening the battery cells 23, with low material cost and low manufacturing cost.

Compared to the solution of arranging the first positioning mating part 21 on the battery cells 23, arranging the first positioning mating part 21 on the end plate 22 can effectively reduce manufacturing costs and avoid the solution where the first positioning hole cannot be arranged on the battery cells 23.

In some embodiments, when the first positioning mating part 21 is provided on the end plate 22 and the first positioning mating part 21 is a first positioning hole, the first positioning hole can penetrate through the end plate 22.

In the foregoing solution, the first positioning mating part 21 is arranged on the end plate 22, thereby eliminating the need to modify the battery cells 23 in the battery module 20, reducing the manufacturing cost of the battery module 20, and ensuring the cooperation between the battery module 20 and the positioning member 30 under low-cost conditions.

In other embodiments, the first positioning mating part 21 can be arranged on other parts of the battery module 20, such as on the battery cell 23 of the battery module 20. In some embodiments, the two end plates 22 of the battery module 20 are connected by side plates, that is, the side of the plurality of battery cells 23 is provided with side plates, and the side plates connect the two end plates 22 to achieve tensioning of the end plates 22. The first positioning mating part 21 can alternatively be arranged on the side plates.

According to some embodiments of this application, refer to FIG. 3. The housing 10 includes a bottom wall 11 and side walls 12, where the side walls 12 are arranged around the bottom wall 11, and the structural beam 40 is arranged on the bottom wall 11, with both ends of the structural beam 40 connected to the side walls 12.

In some embodiments, the housing 10 is a rectangular housing 10, with the bottom wall 11 being a rectangular plate, and the side walls 12 arranged around the four sides of the bottom wall 11. The structural beam 40 is plate-shaped, with the lower surface of the structural beam 40 arranged on the bottom wall 11, and the opposite ends in the length direction of the structural beam 40 are respectively connected to corresponding side walls 12.

In the foregoing solution, the structural beam 40 is arranged on the bottom wall 11, and its ends are connected to the side walls 12, which can effectively improve the structural strength of the housing 10, making the battery 100 structure stable.

According to other embodiments of this application, the structural beam 40 divides the internal space of the housing 10 into two chambers, and at least one of the chambers is provided with at least one battery module 20.

The structural beam 40 is located inside the housing and divides the internal space of the housing 10 into two chambers. One of the chambers can be provided with at least one battery module 20, that is, one, two, or more battery modules 20. In some embodiments, the other chamber can be provided with one, two, or more battery modules 20. With the structural beam 40 separating the battery modules 20, thermal propagation can be effectively avoided, ensuring the safety of the battery modules 20 in each chamber. Alternatively, in other embodiments, the other chamber can be provided with another functional component of the battery 100, such as a battery management system for detecting the operating state of the battery modules 20 in the battery 100, to separate the battery modules 20 from other functional components. Alternatively, in other embodiments, the other chamber can be used as a buffer chamber, that is, without setting battery modules 20 and other functional components, used as a chamber for buffering external impacts.

According to some embodiments of this application, combined with FIGs. 2 and 3, the structural beam 40 divides the internal space of the housing 10 into a first chamber 13 and a second chamber 14, and each of the first chamber 13 and the second chamber 14 is provided with at least one battery module 20.

Along a thickness direction of the structural beam 40, the structural beam 40 divides the internal space of the housing 10 into the first chamber 13 and the second chamber 14, which are separated. Both the first chamber 13 and the second chamber 14 are provided with battery modules 20. The number of battery modules 20 in the first chamber 13 and the second chamber 14 can be the same or different. For example, in some embodiments, there can be two battery modules 20 in both the first chamber 13 and the second chamber 14. In other embodiments, there can be one battery module 20 in the first chamber 13 and two battery modules 20 in the second chamber 14.

In the foregoing solution, the structural beam 40 is arranged on the bottom wall 11, and its ends are connected to the side walls 12, which can effectively improve the structural strength of the housing 10, making the battery 100 structure stable. In addition, the structural beam 40 divides the internal space of the housing 10 into the first chamber 13 and the second chamber 14, allowing a plurality of battery modules 20 to be separately arranged, reducing the risk of thermal propagation (thermal propagation refers to the situation where one battery module 20 undergoes thermal runaway and affects adjacent battery modules 20), and improving the safety of the battery 100.

According to some embodiments of this application, refer to FIG. 2 and FIG. 7. FIG. 7 is a sectional view of the positioning member 30 and the structural beam 40 according to some embodiments of this application.

The positioning member 30 bypasses the structural beam 40 to position the battery module 20 arranged in the first chamber 13 and the battery module 20 arranged in the second chamber 14.

Since the battery modules 20 are located on both sides of the structural beam 40 and the battery modules 20 on both sides of the structural beam 40 are separated by the structural beam 40, the positioning member 30 can be arranged to bypass the structural beam 40 to cooperate with the battery modules 20 in the first chamber 13 and the second chamber 14 for positioning.

"Bypass" means that the positioning member 30 is designed in shape to avoid the structural beam 40 and cooperate with the battery modules 20 separated by the structural beam 40.

In the foregoing solution, the positioning member 30 bypasses the structural beam 40, allowing the battery module 20 in the first chamber 13 and the battery module 20 in the second chamber 14 to be positioned separately, ensuring that each battery module 20 is in the appropriate position within the housing 10.

It should be noted that in other embodiments, the positioning member 30 can be arranged to not bypass the structural beam 40, for example, by directly passing through the structural beam 40 to cooperate with the battery modules 20 in the first chamber 13 and the second chamber 14 for positioning.

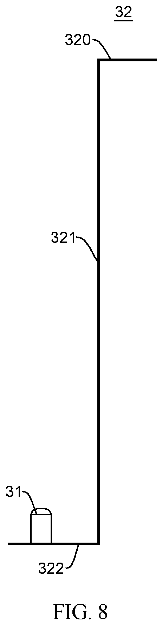

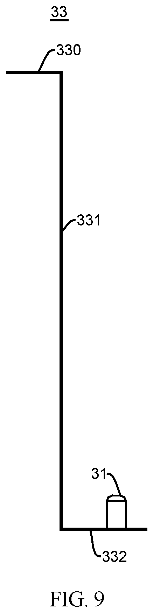

According to some embodiments of this application, refer to FIG. 2, FIG. 5, FIG. 8, and FIG. 9. FIG. 8 is a schematic diagram of the first sub-positioning member 32 according to some embodiments of this application; FIG. 9 is a schematic diagram of the second sub-positioning member 33 according to some embodiments of this application.

The positioning member 30 includes the first sub-positioning member 32 and the second sub-positioning member 33 separately arranged and connected to each other. The first sub-positioning member 32 is configured for positioning the battery module 20 arranged in the first chamber 13, and the second sub-positioning member 33 is configured for positioning the battery module 20 arranged in the second chamber 14. Both the first sub-positioning member 32 and the second sub-positioning member 33 are connected to the structural beam 40.

"Separately arranged and connected to each other" means that when the positioning member 30 is not assembled to the structural beam 40, the first sub-positioning member 32 and the second sub-positioning member 33 are two independent components. When the battery modules 20 in the housing 10 need to be positioned, the first sub-positioning member 32 and the second sub-positioning member 33 cooperate with the battery modules 20 in the first chamber 13 and the second chamber 14 for positioning, respectively, and both the first sub-positioning member 32 and the second sub-positioning member 33 can be connected to the structural beam 40.

"Separately arranged" means that the first sub-positioning member 32 and the second sub-positioning member 33 are independent of each other and do not interfere with each other. The benefit of this is that when the specifications of the battery module 20 in the first chamber 13 change, the first sub-positioning member 32 can be redesigned without redesigning the second sub-positioning member 33; or when the specifications of the battery module 20 in the second chamber 14 change, the second sub-positioning member 33 can be redesigned without redesigning the first sub-positioning member 32.

In the foregoing solution, the first sub-positioning member 32 and the second sub-positioning member 33 are separately arranged and configured for positioning the battery modules 20 in the first chamber 13 and the second chamber 14, respectively. When the specifications of the battery module 20 change, the first sub-positioning member 32 and the second sub-positioning member 33 can be designed, manufactured, and replaced separately, thereby reducing the cost of the positioning member 30.

According to some embodiments of this application, the first sub-positioning member 32 and the second sub-positioning member 33 have a same structure.

"Same structure" means that the first positioning mating parts 21 on the battery modules 20 in the first chamber 13 and the second chamber 14 are in the same position, for example, on the upper surface, lower surface, or outer surface (outer surface refers to the end surface of the battery module 20 along a stacking direction of the battery cells 23) of the battery module 20. Therefore, positions of the first positioning parts 31 on the first sub-positioning member 32 and the second sub-positioning member 33 are consistent, allowing the same assembly actions to cooperate with the upper surface, lower surface, or outer surface of the battery module 20.

For example, when the first positioning mating parts 21 on the battery modules 20 in the first chamber 13 and the second chamber 14 are on the upper surface of the battery module 20, the assembly action can be: first placing the battery modules 20 in the first chamber 13 and the second chamber 14 separately, then assembling the first sub-positioning member 32 and the second sub-positioning member 33 to the structural beam 40, and then separately cooperating with the upper surface of the battery module 20 for positioning.

Conversely, the first sub-positioning member 32 and the second sub-positioning member 33 can have different structures. For example, in some embodiments, when the first positioning mating part 21 of the battery module 20 in the first chamber 13 is on the upper surface of the battery module 20, and the first positioning mating part 21 of the battery module 20 in the second chamber 14 is on the lower surface of the battery module 20, the first sub-positioning member 32 and the second sub-positioning member 33 have different structures. The assembly action can be: placing the battery module 20 in the first chamber 13 first, then assembling the first sub-positioning member 32 to the structural beam 40 to cooperate for positioning the battery module 20 in the first chamber 13; placing the second sub-positioning member 33 in the second chamber 14 first, assembling the second sub-positioning member 33 to the structural beam 40, and then placing the battery module 20 in the second chamber 14. Since there is a gap between the battery module 20 and the housing 10, the position of the battery module 20 can be adjusted to make the battery module 20 and the second sub-positioning member 33 cooperate for positioning.

In the foregoing solution, the first sub-positioning member 32 and the second sub-positioning member 33 have the same structure, so that the first positioning mating parts 21 on the battery modules 20 in the first chamber 13 and the second chamber 14 have the same structure, reducing manufacturing costs due to different designs, and because the structures are the same, the assembly actions are consistent, improving assembly efficiency.

According to some embodiments of this application, refer to FIG. 3, FIG. 7, and FIG. 8. The structural beam 40 has a top surface 41 facing away from the bottom wall 11 and a first side surface 42 facing the first chamber 13. The first sub-positioning member 32 includes a first wall 320, a second wall 321, and a third wall 322. The first wall 320 is connected to the top surface 41, the second wall 321 extends from the first wall 320 towards the bottom wall 11 and covers at least a part of the first side surface 42, and the third wall 322 is connected to the second wall 321; where the third wall 322 is provided with the first positioning part 31.

The top surface 41 of the structural beam 40 is a part connected to the first wall 320 of the first sub-positioning member 32. The first side surface 42 of the structural beam 40 is a part facing the first chamber 13, and at least a part of the first side surface 42 is covered by the second wall 321 of the first sub-positioning member 32. Referring to FIG. 8, the first wall 320 and the second wall 321 can be perpendicular to each other to respectively cover the top surface 41 and the first side surface 42. "Covering at least a part of the first side surface 42" means that the second wall 321 can cover at least part or all of the first side surface 42, so that the third wall 322 can extend into the first chamber 13, making the first positioning part 31 on the third wall 322 cooperate with the first positioning mating part 21 of the battery module 20 in the first chamber 13 for positioning.

In the foregoing solution, the first wall 320 is connected to the top surface 41, and the second wall 321 covers at least a part of the first side surface 42, making the connection between the first sub-positioning member 32 and the structural beam 40 stable, ensuring that the first positioning part 31 on the third wall 322 can effectively position the battery module 20 in the first chamber 13.

According to some embodiments of this application, refer to FIG. 3, FIG. 7, and FIG. 9. The structural beam 40 has a second side surface 43 facing the second chamber 14. The second sub-positioning member 33 includes a fourth wall 330, a fifth wall 331, and a sixth wall 332. The fourth wall 330 is connected to the top surface 41, the fifth wall 331 extends from the fourth wall 330 towards the bottom wall 11 and covers at least a part of the second side surface 43, and the sixth wall 332 is connected to the fifth wall 331; where the sixth wall 332 is provided with the first positioning part 31.

The second side surface 43 of the structural beam 40 is a part facing the second chamber 14, and at least a part of the second side surface 43 is covered by the fifth wall 331 of the second sub-positioning member 33. Referring to FIG. 9, the fourth wall 330 and the fifth wall 331 can be perpendicular to each other to respectively cover the top surface 41 and the second side surface 43. "Covering at least a part of the second side surface 43" means that the fifth wall 331 can cover at least part or all of the second side surface 43, so that the sixth wall 332 can extend into the second chamber 14, making the first positioning part 31 cooperate with the first positioning mating part 21 of the battery module 20 in the second chamber 14 for positioning.

In the foregoing solution, the fourth wall 330 is connected to the top surface 41, and the fifth wall 331 covers at least a part of the second side surface 43, making the connection between the second sub-positioning member 33 and the structural beam 40 stable, ensuring that the first positioning part 31 on the sixth wall 332 can effectively position the battery module 20 in the second chamber 14.

According to some embodiments of this application, refer to FIG. 7, FIG. 8, and FIG. 9. The first wall 320 and the third wall 322 extend in opposite directions from two ends of the second wall 321, and the fourth wall 330 and the sixth wall 332 extend in opposite directions from two ends of the fifth wall 331.

As shown in FIG. 8, the extension directions of the first wall 320 and the third wall 322 are opposite, and both the first wall 320 and the third wall 322 can be parallel to the top surface 41. Referring to FIG. 9, the extension directions of the fourth wall 330 and the sixth wall 332 are opposite, and both the fourth wall 330 and the sixth wall 332 can be parallel to the top surface 41.

Since the third wall 322 and the sixth wall 332 can be parallel to the top surface 41, the first positioning part 31 on the third wall 322 and the first positioning part 31 on the sixth wall 332 can cooperate with the first positioning mating part 21 on the surface of the battery module 20 parallel to the top surface 41 for positioning.

In the foregoing solution, the extension directions of the first wall 320 and the third wall 322 are opposite, that is, the first wall 320 can rest on the top surface 41 of the structural beam 40, and the third wall 322 can rest on the upper surface or the lower surface of the battery module 20 (the upper surface of the battery module 20 is the surface of the battery module 20 facing away from the bottom wall 11, and the lower surface of the battery module 20 is the surface of the battery module 20 facing the bottom wall 11), effectively positioning the battery module 20 in the first chamber 13. Similarly, the extension directions of the fourth wall 330 and the sixth wall 332 are opposite, that is, the fourth wall 330 can rest on the top surface 41 of the structural beam 40, and the sixth wall 332 can rest on the top surface 41 or the bottom surface of the battery module 20, effectively positioning the battery module 20 in the first chamber 13.

According to some embodiments of this application, the battery module 20 has a first surface 220 facing the bottom wall 11 and a second surface 221 facing away from the bottom wall 11, and the first positioning mating part 21 is arranged on the first surface 220 or the second surface 221.

The first surface 220 can be the lower surface of the battery module 20, and the second surface 221 can be the upper surface of the battery module 20. In some embodiments, the first surface 220 can be the lower surface of the end plate 22 of the battery module 20, and the second surface 221 can be the upper surface of the end plate 22 of the battery module 20. In some embodiments, when the first positioning mating part 21 is a first positioning hole, the first positioning hole can penetrate through the first surface 220 and the second surface 221.

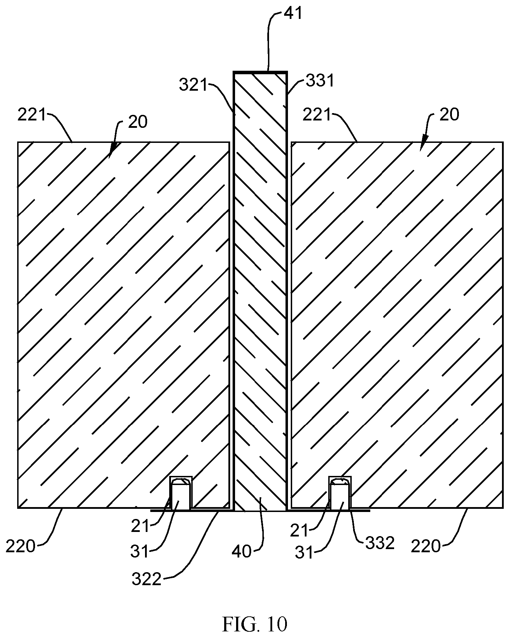

In the foregoing solution, refer to FIG. 10. FIG. 10 is a schematic diagram of the battery module 20 and the first sub-positioning member 32 according to some embodiments of this application. When the first positioning mating part 21 is arranged on the second surface 221, the battery module 20 can be placed in the housing first, and then the positioning member 30 is arranged on the structural beam 40. Since there is a gap between the battery module 20 and the housing 10, the position of the battery module 20 can be adjusted to make the first positioning part 31 and the first positioning mating part 21 cooperate with each other, completing the positioning. Referring to FIG. 10, in a case that the specifications of the battery module 20 change, the position of the first positioning mating part 21 changes accordingly. Therefore, the first sub-positioning member 32 and the second sub-positioning member 33 of the positioning member 30 need to be redesigned and manufactured. The redesign method can be adjusting the position of the first positioning part 31 on the third wall 322 and the sixth wall 332.

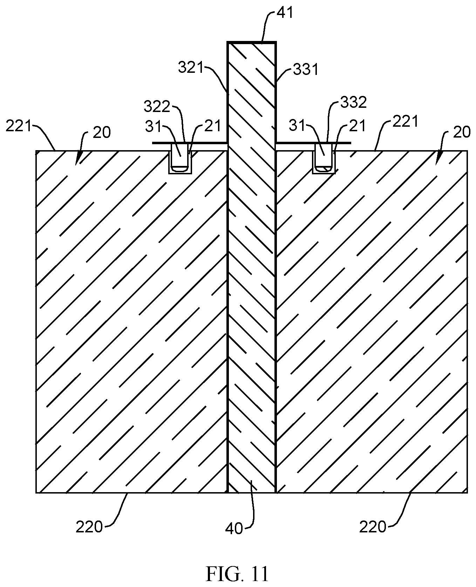

Referring to FIG. 11, FIG. 11 is a schematic diagram of the battery module 20 and the first sub-positioning member 32 according to other embodiments of this application. When the first positioning mating part 21 is arranged on the first surface 220, the positioning member 30 can be arranged on the structural beam 40 first, so that the third wall 322 and the sixth wall 332 are arranged on the bottom wall 11, and then the battery module 20 is placed into the housing 10 based on the first positioning part 31 until the first positioning mating part 21 and the first positioning part 31 are properly engaged, completing the positioning of the battery module 20. Referring to FIG. 11, in a case that the specifications of the battery module 20 change, the position of the first positioning mating part 21 changes accordingly. Therefore, the first sub-positioning member 32 and the second sub-positioning member 33 of the positioning member 30 need to be redesigned and manufactured. The redesign method can be adjusting the position of the first positioning part 31 on the third wall 322 and the sixth wall 332.

According to some embodiments of this application, the first chamber 13 and the second chamber 14 are arranged along a first direction x, and each battery module 20 is provided with at least two first positioning mating parts 21 spaced apart along a second direction y, where the first direction x, the second direction y, and a thickness direction of the bottom wall 11 are perpendicular to each other.

The first direction x can be the thickness direction of the structural beam 40. In this embodiment, the first direction x can alternatively be a width direction of the housing 10. In a case that the first direction x is the width direction of the housing 10, the second direction y can be a length direction of the housing 10.

Referring to FIG. 4, each battery module 20 is provided with at least two first positioning mating parts 21, that is, the positioning member 30 has a corresponding number of first positioning parts 31 to match the number of first positioning mating parts 21, ensuring effective positioning of each battery module 20.

In the foregoing solution, arranging a plurality of first positioning mating parts 21 along the second direction y can improve the positioning accuracy of the positioning member 30 and the battery module 20, ensuring that the battery module 20 is in an appropriate position in the housing 10.

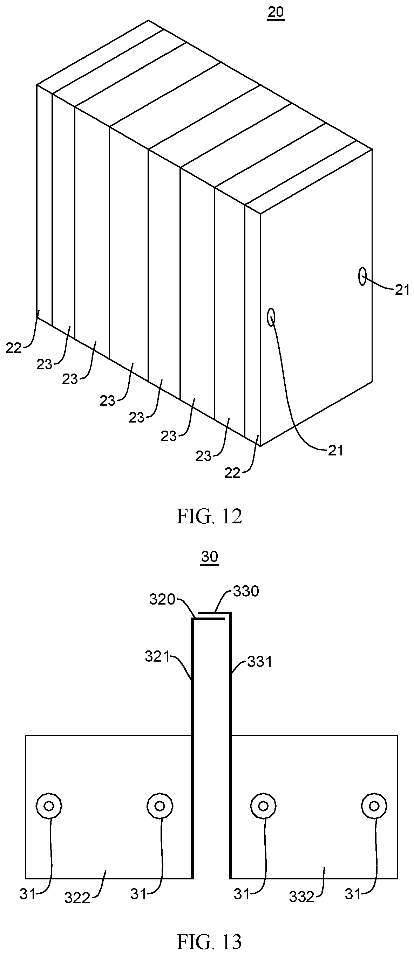

According to some embodiments of this application, refer to FIG. 3, FIG. 12, and FIG. 13. FIG. 12 is a schematic diagram of the battery module 20 according to other embodiments of this application, and FIG. 13 is a schematic diagram of the positioning member 30 according to other embodiments of this application. The first chamber 13 and the second chamber 14 are arranged along the first direction x, and the battery module 20 has two third surfaces opposite each other along the second direction y, and the first positioning mating part 21 is arranged on the third surface. The first direction x, the second direction y, and a thickness direction of the bottom wall 11 are perpendicular to each other.

In some embodiments of this application, the second direction y can be a stacking direction of the plurality of battery cells 23 in the battery module 20. The two opposite third surfaces of the battery module 20 can be outer surfaces of the end plates 22 of the battery module 20.

When the first positioning mating part 21 is arranged on the third surface, referring to FIG. 13, the third wall 322 and the sixth wall 332 can be parallel to the ends of the battery module 20, so that the first positioning parts 31 on the third wall 322 and the sixth wall 332 can cooperate with the first positioning mating part 21 for positioning.

In the foregoing solution, the third surface of the battery module 20 may be the end surface of the battery module 20, that is, the surface of the end plate 22. A plane where the third wall 322 and the sixth wall 332 are located can be parallel to the third surface to cooperate with the first positioning mating part 21 on the third surface for positioning.

According to some embodiments of this application, the first sub-positioning member 32 and the second sub-positioning member 33 are detachably connected to the structural beam 40 separately.

Detachably connected means that the first sub-positioning member 32 and the second sub-positioning member 33 can be conveniently assembled and disassembled from the structural beam 40 to facilitate replacement.

In the foregoing solution, since the first sub-positioning member 32 and the second sub-positioning member 33 are detachably connected to the structural beam 40, the first sub-positioning member 32 and the second sub-positioning member 33 can be conveniently replaced at any time, thereby saving time for replacing the positioning member 30.

In other embodiments, the first sub-positioning member 32 and the second sub-positioning member 33 can alternatively be fixedly connected to the structural beam 40, such as by welding.

According to some embodiments of this application, refer to FIG. 3 and FIG. 5. The top surface 41 is provided with a second positioning pin 44. The first wall 320 and the fourth wall 330 are stacked, the first wall 320 is provided with a second positioning hole 3200 for inserting the second positioning pin 44, and the fourth wall 330 is provided with a third positioning hole 3300 for inserting the second positioning pin 44.

Stacking the first wall 320 and the fourth wall 330 can mean placing the first wall 320 on the top surface 41 and inserting the second positioning pin 44 through the second positioning hole 3200, and then placing the fourth wall 330 on the top surface 41 and inserting the second positioning pin 44 through the third positioning hole 3300; or placing the fourth wall 330 on the top surface 41 first and inserting the second positioning pin 44 through the third positioning hole 3300, and then placing the first wall 320 on the top surface 41 and inserting the second positioning pin 44 through the second positioning hole 3200.

In some embodiments, the diameters of the second positioning hole 3200 and the third positioning hole 3300 (for example, the diameter is 8 mm) can be larger than the diameter of the second positioning pin 44 (for example, the diameter of the second positioning pin 44 is 7.8 mm), so that the second positioning pin 44 can be quickly inserted into the second positioning hole 3200 and a fourth positioning hole. This application does not limit the shape of the second positioning hole 3200 and the third positioning hole 3300, which can be circular, elongated, or square, as long as the second positioning pin 44 can be inserted for positioning.

In other embodiments, the detachable connection between the top surface 41 of the structural beam 40, the first sub-positioning member 32, and the second sub-positioning member 33 can also be achieved using bolts.

In the foregoing solution, the second positioning pin 44 on the top surface 41 of the structural beam 40 can cooperate with the second positioning hole 3200 on the first sub-positioning member 32 and the third positioning hole 3300 on the second sub-positioning member 33, facilitating the detachable assembly between the positioning member 30 and the structural beam 40. In addition, in some embodiments, the structural beam 40 itself has a positioning pin configured for positioning and assembling with the vehicle 1000. Therefore, this positioning pin can be reasonably used as the second positioning pin 44 to cooperate with the positioning member 30.

According to some embodiments of this application, refer to FIG. 3. The battery 100 further includes a partition plate 50, where the partition plate 50 is arranged on the bottom wall 11 and perpendicular to the structural beam 40 to divide the first chamber 13 into two first sub-chambers 130 and the second chamber 14 into two second sub-chambers 140.

The partition plate 50 is arranged in the housing 10 to divide the first chamber 13 into two first sub-chambers 130 and the second chamber 14 into two second sub-chambers 140. As shown in FIG. 3, the middle part of the structural beam 40 can be notched to accommodate the partition plate 50.

In the foregoing solution, the partition plate 50 is arranged to separate the first chamber 13 into two first sub-chambers 130, and the second chamber 14 into two second sub-chambers 140, further dividing the interior of the housing 10 into four sections. This arrangement can reasonably separate a plurality of battery modules 20, thereby ensuring the safety of each battery module 20.

In other embodiments, the number of partition plates 50 can be multiple, and the multiple partition plates 50 can divide the first chamber 13 into multiple first sub-chambers 130 and the second chamber 14 into multiple second sub-chambers 140.

According to some embodiments of this application, refer to FIG. 3 and FIG. 5. The positioning member 30 is formed with an avoidance slot 34 to avoid the partition plate 50.

The first sub-positioning member 32 is formed with an avoidance slot 34, where the avoidance slot 34 can accommodate a portion of the partition plate 50 located in the first chamber 13. Similarly, the second sub-positioning member 33 is formed with an avoidance slot 34, where the avoidance slot 34 can accommodate a portion of the partition plate 50 located in the second chamber 14.

In the foregoing solution, the positioning member 30 is provided with an avoidance slot 34 to avoid the partition plate 50, so that the positioning member 30 can position each battery module 20 arranged in the first sub-chamber 130 and the second sub-chamber 140 in the housing 10.

According to some embodiments of this application, this application further provides an electric device. The electric device includes the battery 100 described above, and the battery 100 is configured to supply electrical energy.

According to some embodiments of this application, this application further provides a battery 100. Refer to FIG. 2 to FIG. 10. The battery 100 includes a housing 10, a battery module 20, and a positioning member 30.

The internal space of the housing 10 is provided with a structural beam 40 and a partition plate 50. The structural beam 40 is connected to a bottom wall 11 and side walls 12 of the housing 10 to improve the structural strength of the housing 10 and divide the internal space of the housing 10 into a first chamber 13 and a second chamber 14. The partition plate 50 is arranged perpendicular to the structural beam 40 to divide the first chamber 13 into two first sub-chambers 130 and the second chamber 14 into two second sub-chambers 140. A top surface 41 of the structural beam 40 has a second positioning pin 44, where the second positioning pin 44 can be configured for positioning and assembling the battery 100 on the chassis of the vehicle 1000, achieving the positioning of the battery 100 in the vehicle 1000.

The battery module 20 is arranged inside the housing 10, and each first sub-chamber 130 and second sub-chamber 140 is provided with a battery module 20. The battery module 20 includes a pair of end plates 22 and a plurality of battery cells 23, where the plurality of battery cells 23 are stacked between the pair of end plates 22, and the first positioning mating part 21 is arranged on the end plate 22.

The positioning member 30 is connected to the structural beam 40 and can position each battery module 20 in the first sub-chamber 130 and the second sub-chamber 140, ensuring that the battery module 20 is in the appropriate position within the housing 10. The positioning member 30 includes a first sub-positioning member 32 and a second sub-positioning member 33, which are separately arranged and connected to each other. The first sub-positioning member 32 and the second sub-positioning member 33 are sheet-like, and the first sub-positioning member 32 and the second sub-positioning member 33 are respectively provided with a second positioning hole 3200 and a third positioning hole 3300. The first sub-positioning member 32 and the second sub-positioning member 33 can be stacked on the structural beam 40 and assembled to the structural beam 40 through the cooperation with the second positioning hole 3200, the third positioning hole 3300, and the second positioning pin 44.

After the first sub-positioning member 32 and the second sub-positioning member 33 are assembled to the structural beam 40, a "U" shape is formed. The first sub-positioning member 32 is used to position the battery module 20 in the first sub-chamber 130, and the second sub-positioning member 33 is used to position the battery module 20 in the second sub-chamber 140. Both the first sub-positioning member 32 and the second sub-positioning member 33 have a first positioning part 31, where the first positioning part 31 is a first positioning pin.

The lower surface of the end plate 22 of each battery module 20 can be provided with a plurality of first positioning mating parts 21, where the first positioning mating parts 21 are first positioning holes. A plurality of first positioning holes are used to cooperate with a plurality of first positioning pins to achieve the positioning of the battery module 20 by the positioning member 30. The head of the first positioning pin can be designed with an inclined surface, and the inclined surface can serve as a guide when the battery module 20 is assembled into the housing 10.

Since the housing 10, the positioning member 30, and the battery module 20 are separately sourced, when the specifications of the battery module 20 change, only a low-cost positioning member 30 needs to be changed without redesigning the entire housing 10. This can effectively reduce costs while ensuring that the battery module 20 is positioned in the appropriate place within the housing 10.

The foregoing descriptions are merely preferred embodiments of this application which are not intended to limit this application. Persons skilled in the art understand that this application may have various modifications and variations. Any modification, equivalent replacement, and improvement made without departing from the spirit and principle of this application shall fall within the protection scope of this application.

## Claims

1. A battery, comprising:
a housing, wherein a structural beam is arranged inside the housing;
a battery module, arranged in the housing; and
a positioning member, connected to the structural beam and configured for positioning the battery module.

2. The battery according to claim 1, wherein
the positioning member is provided with a first positioning part, and the battery module is provided with a first positioning mating part, wherein the first positioning part cooperates with the first positioning mating part.

3. The battery according to claim 2, wherein
the first positioning part is a first positioning pin, and the first positioning mating part is a first positioning hole; or the first positioning part is a first positioning hole, and the first positioning mating part is a first positioning pin.

4. The battery according to claim 2 or 3, wherein
the battery module comprises a pair of end plates and a plurality of battery cells, wherein the plurality of battery cells are stacked between the pair of end plates, and the first positioning mating part is arranged on the end plate.

5. The battery according to any one of claims 2 to 4, wherein
the housing comprises a bottom wall and side walls, the side walls are arranged around the bottom wall, the structural beam is arranged on the bottom wall, and both ends of the structural beam are connected to the side walls.

6. The battery according to claim 5, wherein
the structural beam divides the internal space of the housing into two chambers, and at least one of the chambers is provided with at least one battery module.

7. The battery according to claim 5, wherein
the structural beam divides the internal space of the housing into a first chamber and a second chamber, and each of the first chamber and the second chamber is provided with at least one battery module.

8. The battery according to claim 7, wherein
the positioning member bypasses the structural beam to position the battery module arranged in the first chamber and the battery module arranged in the second chamber.

9. The battery according to claim 8, wherein
the positioning member comprises a first sub-positioning member and a second sub-positioning member separately arranged and connected with each other, wherein the first sub-positioning member is configured for positioning the battery module arranged in the first chamber, the second sub-positioning member is configured for positioning the battery module arranged in the second chamber, and both the first sub-positioning member and the second sub-positioning member are connected to the structural beam.

10. The battery according to claim 9, wherein
the first sub-positioning member and the second sub-positioning member have a same structure.

11. The battery according to claim 9 or 10, wherein
the structural beam has a top surface facing away from the bottom wall and a first side surface facing the first chamber, and
the first sub-positioning member comprises a first wall, a second wall, and a third wall, wherein the first wall is connected to the top surface, the second wall extends from the first wall towards the bottom wall and covers at least a part of the first side surface, and the third wall is connected to the second wall,
wherein the third wall is provided with the first positioning part.

12. The battery according to claim 11, wherein
the structural beam has a second side surface facing the second chamber, and
the second sub-positioning member comprises a fourth wall, a fifth wall, and a sixth wall, wherein the fourth wall is connected to the top surface, the fifth wall extends from the fourth wall towards the bottom wall and covers at least a part of the second side surface, and the sixth wall is connected to the fifth wall,
wherein the sixth wall is provided with the first positioning part.

13. The battery according to claim 12, wherein
the first wall and the third wall extend in opposite directions from two ends of the second wall, and the fourth wall and the sixth wall extend in opposite directions from two ends of the fifth wall.

14. The battery according to claim 12 or 13, wherein
the battery module has a first surface facing the bottom wall and a second surface facing away from the bottom wall, and the first positioning mating part is arranged on the first surface or the second surface.

15. The battery according to claim 14, wherein
the first chamber and the second chamber are arranged along a first direction, and each battery module is provided with at least two first positioning mating parts spaced apart along a second direction, wherein the first direction, the second direction, and a thickness direction of the bottom wall are perpendicular to each other.

16. The battery according to any one of claims 12 to 15, wherein
the first chamber and the second chamber are arranged along a first direction, the battery module has two third surfaces opposite each other along a second direction, and the first positioning mating part is arranged on the third surface, wherein the first direction, the second direction, and a thickness direction of the bottom wall are perpendicular to each other.

17. The battery according to any one of claims 12 to 16, wherein
the first sub-positioning member and the second sub-positioning member are detachably connected to the structural beam separately.

18. The battery according to claim 17, wherein
the top surface is provided with a second positioning pin, the first wall and the fourth wall are stacked, the first wall is provided with a second positioning hole for inserting the second positioning pin, and the fourth wall is provided with a third positioning hole for inserting the second positioning pin.

19. The battery according to any one of claims 7 to 18, wherein
the battery further comprises a partition plate, wherein the partition plate is arranged on the bottom wall and perpendicular to the structural beam to divide the first chamber into two first sub-chambers and the second chamber into two second sub-chambers.

20. The battery according to claim 19, wherein
the positioning member is formed with an avoidance slot to avoid the partition plate.

21. An electric device, comprising the battery according to any one of claims 1 to 20, wherein the battery is configured to supply electrical energy.
